# EUROPEAN PATENT APPLICATION

(11) **EP 4 447 300 A1**
(43) Date of publication of application: **16.10.2024**
(21) Application number: 22905739.3
(22) Date of filing: 22.04.2022
(51) Int. Cl.: H02K 35/02, H02J 7/32, H02J 7/00

(54) **PRESSING POWER GENERATION AND LOW-POWER-CONSUMPTION SIGNAL TRANSMISSION APPARATUS**

(30) Priority: 17.12.2021 CN 202111554113
(71) Applicant: He, Zhiming, Guangdong 523750 (CN)
(72) Inventor: He, Zhiming, Guangdong 523750 (CN)
(74) Representative: Pons
(86) International application number: PCT/CN2022/088442
(87) International publication number: WO 2023/108971

(57) **Abstract**

Disclosed is a pressing power generation and low-power-consumption signal transmission apparatus that comprises a housing, a magnet set shell and a rotating shaft. Two symmetrical mounting lug plates with two symmetrical through holes are provided at the housing. The magnet set shell has a shaft hole for the rotating shaft to mount the magnet set shell on the housing. A tongue core is provided in the middle of the interior of the housing, a coil is mounted in the housing by means of the tongue core. The magnet set shell has a cavity with a buckle, a magnetically conductive sheet and a magnet, the magnet being located above the magnetically conductive sheet, where a clamping hole is provided, and the clamping hole is snapped into the buckle to fix the magnetically conductive sheet in the cavity.

## Description

This patent application claims the priority of Chinese Patent Application No. CN202111554113.2 filed with the China National Intellectual Property Administration on December 17, 2021, and entitled "Pressing power generation and low-power-consumption signal transmission apparatus", the entire content of which is incorporated by reference in the present application.

### TECHNICAL FIELD

The present disclosure relates to the technical field of pressing power generation, and in particular to a pressing power generation and low-power-consumption signal transmission apparatus.

### BACKGROUND

Distributed sensor is a typical representative of comprehensive informatization under the Internet of Everything. According to the prediction of Forbes magazine in the United States, by 2025, there will be 1 trillion sensors in the world.

The traditional wiring power supply mode is limited by the spatial scale of environment and location, while the battery power supply mode is limited by the time scale of reliability and life. Under the background of peak carbon peaking and carbon neutrality, the traditional wiring and power supply mode is apparently not environmental-friendly.

Moreover, the main problems of the existing pressing power generation module are many parts, large volume, complicated technology, difficult manufacturing, low product yield and low power generation efficiency, which causes the high cost of power generation module and seriously affects the application and promotion of such products.

### SUMMARY

To this end, a pressing power generation and low-power-consumption signal transmission apparatus is provided by an embodiment of the present disclosure, so as to solve the problem the application and promotion of such products are seriously affected due to high cost of power generation module caused by many parts, large volume, complex technology, difficult manufacturing, low product yield and low power generation efficiency.

To achieve the objective above, the present disclosure employs the following technical solution:
A pressing power generation and low-power-consumption signal transmission apparatus includes a signal transmission module, and a power generation module configured for supplying power for the signal transmission module. The power generation module includes a housing, a shell of magnet set, and a rotating shaft. Two mounting lug plates are provided symmetrically at one end of the housing, and two through holes are symmetrically formed in the two mounting lug plates respectively. The shell of magnet set is provided with a shaft hole, and the rotating shaft runs through the shaft hole to mount the shell of magnet set between the two mounting lug plates. A tongue core and a coil surrounding the tongue core are provided at a middle in the housing. There exists a gap between the coil and the tongue core.

The shell of magnet set is provided with a cavity opening towards the tongue core, a buckle is provided in the cavity, and a magnetically conductive sheet and a magnet are placed in the cavity. The magnetically conductive sheet is located below the magnet and is attracted to one magnetic pole of the magnet. A clamping hole is formed in the magnetically conductive sheet, and the buckle is snapped into the clamping hole to fix the magnetically conductive sheet and the magnet into the cavity. One end, away from the tongue core, of the shell of magnet set is an operating end, and the operating end extends out of the housing.

In an initial state, a tail end of the tongue core is attracted to a free end of the magnetically magnetic sheet.

When the operating end is pressed, the shell of magnet set is deflected around the rotating shaft. The tail end of the tongue core is suffered from deformation under strong magnetic attraction of the magnet. The tail end of the tongue core is disconnected from the free end of the magnetically conductive sheet when an offset position of the tail end of the tongue core exceeds a critical point. The tail end of the tongue core is limited by an internal dimension of the cavity to not exceed the magnetic attraction range. When an external force is removed from the operating end, the tail end of the tongue core is automatically reset under the attraction of a magnetic force. During the tail end of the tongue core is disconnected from/attracted to the free end of the magnetically conductive sheet, an induced electromotive force is generated in the coil.

Preferably, the housing is an integrally formed metal shell.

Preferably, a fixed end of the tongue core and the housing are integrally formed.

Preferably, the apparatus further includes an adapter circuit board. Convex plates are provided at both sides of the tail end of the housing, and the adapter circuit board is fixed to the housing through the convex plates. The signal transmission module is electrically connected to the coil through the adapter circuit board.

Preferably, the adapter circuit board is adhered to the top of the housing by a double-sided adhesive.

Preferably, the signal transmission apparatus includes a rectifier module, an energy storage module, a step-down module, a starting module, and an instruction sending module. The rectifier module, the energy storage module, the step-down module, the starting module and the instruction sending module are electrically connected in turn.

Preferably, a gluing process hole is formed in a bottom of the housing.

Preferably, a pocket hole is formed in a top of the housing.

Preferably, protrusions are provided at both ends of the shaft hole.

Preferably, a fixing hole is formed in a side surface of the housing.

The present disclosure at least has the following beneficial effects: A pressing power generation and low-power-consumption signal transmission apparatus includes a signal transmission module, and a power generation module configured for supplying power for the signal transmission module. The power generation module includes a housing, a shell of magnet set, and a rotating shaft. Two mounting lug plates are provided symmetrically at one end of the housing, and two symmetrical through holes are provided in the two mounting lug plates. The shell of magnet set is provided with a shaft hole, and the rotating shaft runs through the shaft hole to mount the shell of magnet set on the housing. A tongue core is provided in the middle in the interior of the housing, a coil is mounted in the housing by means of the tongue core, and there exists a gap between the coil and the tongue core. The shell of magnet set is provided with a cavity, a buckle is provided in the cavity, a magnetically conductive sheet and a magnet are placed in the cavity, the magnet is located above the magnetically conductive sheet, a clamping hole is provided on the magnetically conductive sheet, and the clamping hole is snapped into the buckle to fix the magnetically conductive sheet in the cavity. The pressing power generation and low-power-consumption signal transmission apparatus provided by the present disclosure is small and thin, has few parts, low cost, simple assembly, and does not require complicated processes such as riveting.

### BRIEF DESCRIPTION OF THE DRAWINGS

To describe the prior art and the present disclosure more clearly, the following briefly introduces the prior art and the accompanying drawings required for describing the prior art and the embodiments of the present disclosure. Apparently, the accompanying drawings in the following description are exemplary, and those of ordinary skill in the art may still derive other drawings from these accompanying drawings without creative efforts.

The structure, proportion, size and so on shown in the drawings in this specification are only used to match the contents disclosed in this specification for those skilled in the art to understand and read, and are not used to limit the conditions for the implementation of the present disclosure. Any modification of the structure, change of proportion or adjustment of size should still fall within the scope of the technical contents disclosed in the present disclosure without affecting the efficacy and objectives that can be achieved by the present disclosure.
FIG. 1 is a structural schematic diagram of a pressing power generation and low-power-consumption signal transmission apparatus according to an embodiment of the present disclosure;
FIG. 2 is an exploded view of a pressing power generation and low-power-consumption signal transmission apparatus according to an embodiment of the present disclosure;
FIG. 3 is a structural schematic diagram of a housing an embodiment of the present disclosure;
FIG. 4 is a structural schematic diagram of a shell of magnet set and a magnetically conductive sheet according to an embodiment of the present disclosure;
FIG. 5 is a schematic diagram of an adhesive structure of an adapter circuit board according to an embodiment of the present disclosure;
FIG. 6 is a schematic diagram of a mounting structure of a signal transmission apparatus on a pressing power generation and low-power-consumption signal transmission apparatus according to an embodiment of the present disclosure;
FIG. 7 is a circuit diagram of a signal transmission apparatus according to an embodiment of the present disclosure;
FIG. 8 is a structural schematic diagram of power generation process of a pressing power generation and low-power-consumption signal transmission apparatus according to an embodiment of the present disclosure;
FIG. 9 is a circuit diagram of four applications of a pressing power generation and low-power signal transmission apparatus according to an embodiment of the present disclosure, a is a unidirectional direct start circuit without a mechanical button, b is a unidirectional start circuit with a mechanical button, c is a unidirectional start circuit and a start circuit with a mechanical button; d is a bidirectional direct circuit without a mechanical button.

In the drawings:
1-housing; 11-tongue core; 12-mounting lug plate; 121-through hole; 13-pocket hole; 14-convex plate; 15-gluing process hole; 16-fixing hole; 2-shell of magnet set; 21-shaft hole; 22-cavity; 23-buckle; 24-protrusion; 3-rotating shaft; 4-magnetically conductive sheet; 41-clamping hole; 5-magnet; 6-adapter circuit board; 7-coil; 8-signal transmission apparatus.

### DETAILED DESCRIPTION OF THE EMBODIMENTS

In order to make the objectives, technical solutions and advantages of the present disclosure more clearly, the present disclosure is further described in detail below with reference to the accompanying drawings and embodiments. It should be understood that specific embodiments described here are only used to illustrate rather than limiting the present disclosure.

In the description of the present disclosure, "a plurality of" means two or more, unless otherwise specifically defined. In the specification, claims, and accompanying drawings of the present disclosure, the terms "first", "second", "third", "fourth", and so on (if any) are intended to distinguish the objects referred to. For the scheme with time sequence flow, this term expression does not need to be understood as describing a specific order or sequence, and for the scheme with apparatus structure, there is no distinction between the degree of importance and position relationship in this term expression.

Moreover, the terms "include", "contain", and any other variants mean to cover the non-exclusive inclusion. For example, a process, method, system, product, or device including a series of steps or units is not necessarily limited to those explicitly listed, but may also include other steps or units that are not explicitly listed but are inherent to these processes, methods, products or devices, or steps or units that are added based on the further optimization scheme conceived in the present disclosure.

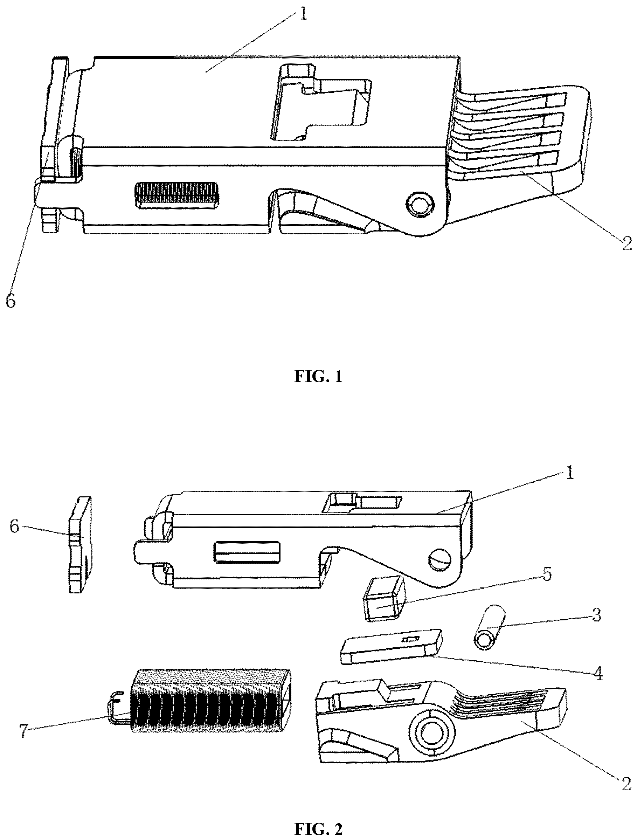

Please referring to FIGS. 1 to 4, a pressing power generation and low-power-consumption signal transmission apparatus is provided by an embodiment of the present disclosure, including a housing 1, a shell of magnet set 2, and a rotating shaft 3. Two mounting lug plates 12 are provided symmetrically at one end of the housing 1, and two through holes 121 are symmetrically formed in the two mounting lug plates 12, respectively. The shell of magnet set 2 is provided with a shaft hole 21, the rotating shaft 3 runs through the shaft hole 21 to mount the shell of magnet set 2 on the housing 1. A tongue core 11 is provided in the middle in the interior of the housing 1, and the housing 1 is an integrally formed shell. A fixed end of the tongue core 11 and the housing 1 are integrally formed. The coil 7 is mounted in the housing 1 through the tongue core 11. The tongue core 11 serves as an iron core of the coil 7, and there exists a gap between the coil 7 and the tongue core 11. The pressing power generation and low-power-consumption signal transmission apparatus provided by the present disclosure has the advantages of few parts, low cost, simple assembly and no complicated procedures such as riveting. The efficiency is high, and the magnitude ϕ of magnetic flux is equal to the product of magnetic field intensity B and area S (ϕ = bs). Under the same magnetic field intensity, the more the magnetic induction lines pass through a plane perpendicular to the magnetic field direction, the greater the magnetic flux. Because the greater the integrally formed shell pass through the area perpendicular to a magnetic field direction, the more the passing magnetic flux, the power generation efficiency can be greatly improved. The apparatus has high modularity, wider application range, and small and thin size, and is more conducive to industrial design.

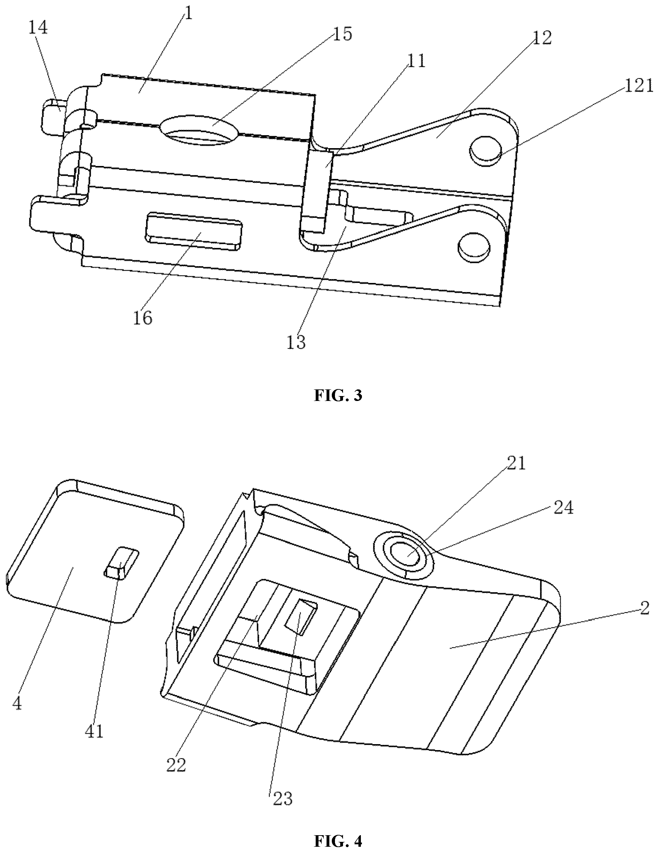

Please referring to FIG. 3, a gluing process hole 15 is formed in the bottom of the housing 1. The gluing process hole 15 is used for gluing and fixing the coil 7. In the present disclosure, the whole apparatus is relatively thin, so a pocket hole 13 is formed in the top of the housing 1. However, if the whole apparatus is relatively thick, the pocket hole 13 can also be removed. A fixing hole 16 is formed in a side surface of the housing 1 for being connected to other bodies. A slot at the bottom of the housing 1 for connecting the gluing process hole 15 is a wire slot. The wire slot needs to ensure the smooth passage of a lead wire of an induction coil, so the general wire slot should be less than 0.25 mm.

Please referring to FIG. 4, the shell of magnet set 2 is injection-molded. The magnet group shell 2 is provided with a cavity 22, and a buckle 23 is arranged in the cavity 22. A magnetically conductive sheet 4 and a magnet 5 are placed in the cavity 22, and the magnet 5 is located above the magnetically conductive sheet 4. A clamping hole 41 is formed in the magnetically conductive sheet 4, and the buckle 23 is snapped into the clamping hole 41 to fix the magnetically conductive sheet 4 in the cavity 22. Protrusions 24 are formed at both ends of the shaft hole 21. The protrusions 24 are mainly used to avoid a situation that the speed is affected as other parts rub against the integrated housing when moving. A process hole is formed in the bottom of the magnet group shell 2, thereby making manufacture easier by using a mold.

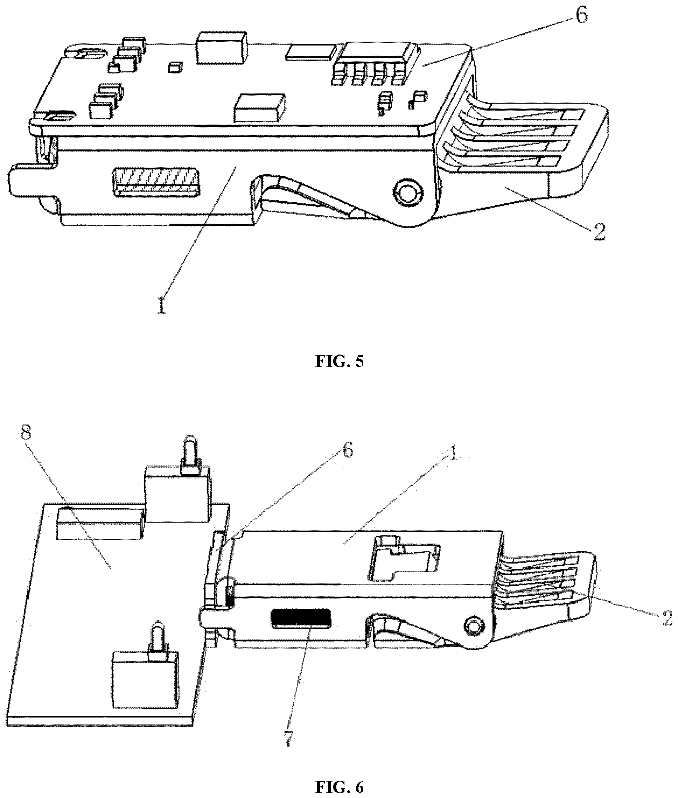

Please referring to FIG. 1, FIG. 4 and FIG. 5, a pressing power generation and low-power-consumption signal transmission apparatus provided by an embodiment of the present disclosure further includes an adapter circuit board 6. The adapter circuit board 6 is mainly configured to conduct electricity to the signal transmission apparatus 8. The adapter circuit board 6 is fixed to the housing 1 in two ways. Referring to FIGS. 1 to 4, one is that convex plates 14 are provided at both sides of the tail end of the housing, the adapter circuit board 6 is fixed to the housing 1 through the convex plates 14 and then is electrically connected to the coil 7. Please referring to FIG. 5, the adapter circuit board 6 may also be adhered to the top of the housing 1 by a double-sided adhesive.

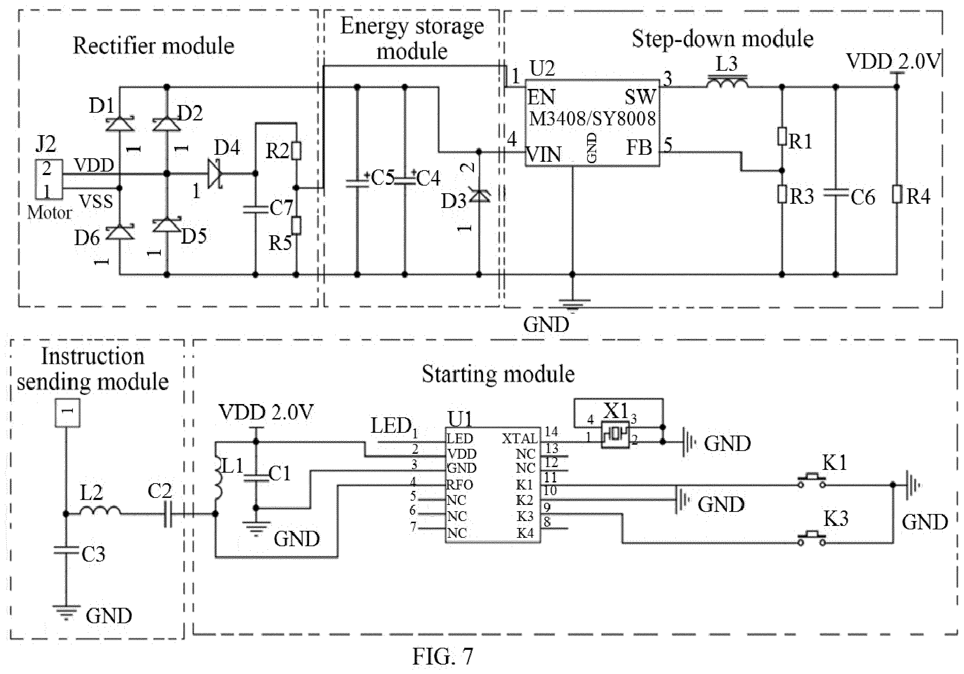

Please referring to FIG. 6 and FIG. 7, the pressing power generation and low-power-consumption signal transmission apparatus provided by an embodiment of the present disclosure further includes a signal transmission apparatus 8. The signal transmission apparatus 8 is electrically connected to the adapter circuit board 6. The signal transmission apparatus 8 includes a rectifier module, an energy storage module, a step-down module, a starting module, and an instruction sending module. The rectifier module, the energy storage module, the step-down module, the starting module and the instruction sending module are electrically connected in turn.

It should be noted that the pressing power generation and low-power-consumption signal transmission apparatus provided by the present disclosure can be mounted on the front and back sides according to the specific use environment, and only has one magnetically conductive sheet, which makes the cost lower, the production efficiency higher, and a pressing driving force smaller (good hand feeling). As there is no need to superimpose the strength of a reset spring (assuming that the strength of the magnet as well as the iron core and the reset spring is 2N each, the pressing force needs to be greater than 2+2 = 4N, and only 2N pressing force is required when there is no reset spring), the pressing force is apparently smaller. Meanwhile, the noise is less because one only magnetic conductive sheet is in contact with the iron core.

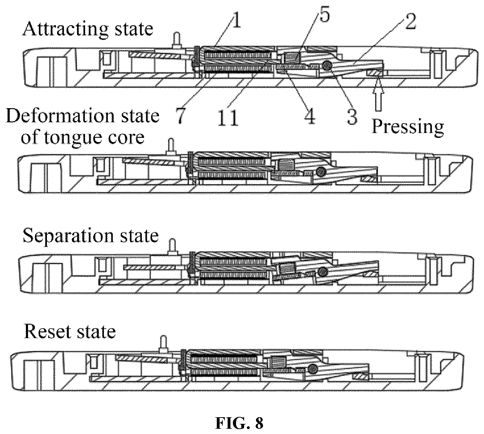

Please referring to FIG. 8, one end, not in contact with the magnetically conductive sheet 4, of the magnet 5 is S/N pole, and one end, in contact with the magnetically conductive sheet 4, of the magnet 5 is N/S pole. In an initial state, the tail end of the tongue core 11 is attracted to the free end of the magnetically conductive sheet 4. When the shell of magnet set 2 extending out of the housing 1 (i.e., operating end) receives an external pressure, the shell of magnet set 2 moves downwards around the rotating shaft 3. The tongue core 11 is suffered from downwards deformation under the strong magnetic attraction of the magnet 5. When the tongue core 11 moves downwards to exceed a critical point, the tongue core 11 is disconnected from the magnetically conductive sheet 4. The tongue core 11 rebounds upwards and is automatically reset under the strong magnetic attraction of the magnet 5, and an induced electromotive force is generated in the coil 7. A height of the cavity 22 enables the tongue core 11 to automatically reset under the strong magnetic attraction of the magnet 5 after rebounding upwards.

A specific pressing power generation and low-power-consumption transmission process is as follows:
S 1. The shell of magnet set 2 extending out of the housing 1 is pressed to make the shell of magnet set 2 move downwards around the rotating shaft 3.

Specifically, the shell of magnet set 2 moves downwards around the rotating shaft 3 at an angle of about 6 degrees.

S2. The tail end of the tongue core 11 is suffered from downwards deformation under the strong magnetic attraction of the magnet 5, and the tongue core 11 and the magnet 5 are attracted together at rest.

Specifically, there exists a gap between the tongue core 11 and the interior of the coil 7, so the tongue core 11 can be suffered from downwards deformation under the strong magnetic attraction of the magnet 5.

S3. When the tongue core 11 moves downwards to exceed the critical point, the tongue core 11 is disconnected from the magnet 5, the tongue core 11 rebounds, and is automatically reset under the strong magnetic attraction of the magnet 5.

Specifically, when the magnet 5 is disconnected from the tongue core 11, as the tongue core 11 is in a deformed state, and the integrated shell made of metal can produce rapid rebound (such as rubber band), high-speed vibration may be caused at the moment of disconnection during rebound, which is beneficial to power generation. During resetting, the magnet 5 is magnetically reset by itself, and after the external mechanical force stops pressing, the magnetically conductive sheet 4 with the magnetic force is automatically and tightly attracted to the tongue core 11.

S4. An induced electromotive force is generated in the coil 7 to supply power to the adapter circuit board 6.

Specifically, the external mechanical force plays a role of driving a magnet set (magnetic field) to move up and down and continuously cut a magnetic induction line, and the induced electromotive force is generated in the coil 7. The number of turns of the coil 7, the intensity of the magnetic field and the speed all affect the power generation effect.

S5. Electric energy generated by the low-power-consumption pressing power generation is rectified through the rectifier module.

S6. The rectified electric energy is stored in the energy storage module.

S7. The electric energy stored in the energy storage module is stepped down.

S8. The stepped-down electric energy supplies power for the starting module.

S9. The starting module starts the instruction sending module to send an instruction.

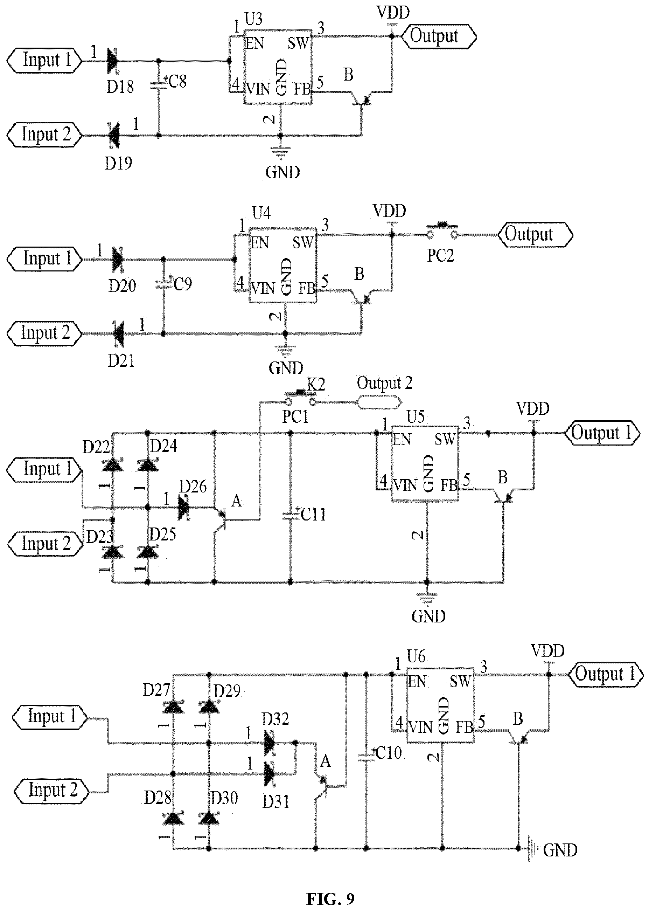

Please referring to FIG. 9, four applications of the pressing power generation and low-power-consumption signal transmission apparatus according to an embodiment of the present disclosure are provided.

### Embodiment 1: Unidirectional direct start without mechanical button

Power-on is to start the circuit to supply power to a RF (radio frequency) without buttons, and the circuit is simple, stable, and reliable (which can be applied to a doorbell and other products).

### Embodiment 2: Unidirectional start with mechanical button

Specifically, a circuit board of a product with more than two buttons (such as a two-position switch) only needs one mechanical switch, which can reduce the cost.

### Embodiment 3: Unidirectional start and start with mechanical button

When a reciprocating type rebounded power generation module is used, the circuit can be started by both pressing and rebounding to supply power to the RF module (sending two different instructions).

### Embodiment 4: Bidirectional start without mechanical button

When a reciprocating type rebounded power generation module is used, the circuit can be started by both pressing and rebounding to supply power to the RF module (sending the same instruction twice). The circuit can be applied to a dimmer switch and the like.

The above specific embodiments can be combined with each other, and the same or similar concepts or processes may not be repeated in some embodiments.

The technical features of the above embodiments can be combined at will (as long as there is no contradiction in the combination of these technical features). In order to make the description concise, not all possible combinations of the technical features in the above embodiments are described. These embodiments that are not explicitly written should also be considered as the scope recorded in this specification.

The present disclosure has been specifically described in detail through general description and specific embodiments. It should be noted that for those of ordinary skill in the art, several deformations and improvements can be made without departing from the concept of the present disclosure, all of which fall within the scope of protection of the present disclosure. Therefore, the scope of protection of the patent of the present disclosure shall be subject to the appended claims.

## Claims

1. A pressing power generation and low-power-consumption signal transmission apparatus, **characterized in that** the apparatus comprising a signal transmission module, and a power generation module configured for supplying power for the signal transmission module, wherein the power generation module comprises a housing, a shell of magnet set, and a rotating shaft; two mounting lug plates are provided symmetrically at one end of the housing, and two through holes are symmetrically formed in the two mounting lug plates respectively; the shell of magnet set is provided with a shaft hole, the rotating shaft runs through the shaft hole to mount the shell of magnet set between the two mounting lug plates; a tongue core and a coil surrounding the tongue core are provided at a middle in the housing; a gap exists between the coil and the tongue core;
the shell of magnet set is provided with a cavity opening towards the tongue core, a buckle is provided in the cavity, a magnetically conductive sheet and a magnet are placed in the cavity; the magnetically conductive sheet is located below the magnet and is attracted to one magnetic pole of the magnet; a clamping hole is formed in the magnetically conductive sheet, the buckle is snapped into the clamping hole to fix the magnetically conductive sheet and the magnet into the cavity; one end, away from the tongue core, of the shell of magnet set is an operating end, and the operating end extends out of the housing;
in an initial state, a tail end of the tongue core is attracted to a free end of the magnetically magnetic sheet;
when the operating end is pressed, the shell of magnet set is deflected around the rotating shaft; the tail end of the tongue core is suffered from deformation under strong magnetic attraction of the magnet; the tail end of the tongue core is disconnected from the free end of the magnetically conductive sheet when an offset position of the tail end of the tongue core exceeds a critical point; the tail end of the tongue core is limited by an internal dimension of the cavity to not exceed the magnetic attraction range; when an external force is removed from the operating end, the tail end of the tongue core is automatically reset under an attraction of a magnetic force; during the tail end of the tongue core is disconnected from/attracted to the free end of the magnetically conductive sheet, an induced electromotive force is generated in the coil.

2. The pressing power generation and low-power-consumption signal transmission apparatus according to claim 1, **characterized in that** the housing is an integrally formed metal shell.

3. The pressing power generation and low-power-consumption signal transmission apparatus according to claim 1, **characterized in that** a fixed end of the tongue core and the housing are integrally formed.

4. The pressing power generation and low-power-consumption signal transmission apparatus according to claim 1, **characterized in that** the apparatus further comprising an adapter circuit board, wherein convex plates are provided at both sides of the tail end of the housing, and the adapter circuit board is fixed to the housing through the convex plates; and the signal transmission module is electrically connected to the coil through the adapter circuit board.

5. The pressing power generation and low-power-consumption signal transmission apparatus according to claim 4, **characterized in that** the adapter circuit board is adhered to a top of the housing through a double-side adhesive.

6. The pressing power generation and low-power-consumption signal transmission apparatus according to claim 1, **characterized in that** the signal transmission apparatus comprises a rectifier module, an energy storage module, a step-down module, a starting module, and an instruction sending module; and the rectifier module, the energy storage module, the step-down module, the starting module and the instruction sending module are electrically connected in turn.

7. The pressing power generation and low-power-consumption signal transmission apparatus according to claim 1, **characterized in that** a gluing process hole is formed in a bottom of the housing.

8. The pressing power generation and low-power-consumption signal transmission apparatus according to claim 1, **characterized in that** a pocket hole is formed in a top of the housing.

9. The pressing power generation and low-power-consumption signal transmission apparatus according to claim 1, **characterized in that** protrusions are provided at both ends of the shaft hole.

10. The pressing power generation and low-power-consumption signal transmission apparatus according to claim 1, **characterized in that** a fixing hole is formed in a side surface of the housing.
